# EUROPEAN PATENT SPECIFICATION

(11) **EP 0 988 468 B1**
(45) Date of publication and mention of the grant of the patent: **04.08.2004**
(21) Application number: 99915929.6
(22) Date of filing: 13.04.1999
(51) Int. Cl.: F16D 65/66, F16D 51/20

(54) **ELECTRICALLY ACTUATED BRAKE WITH AUTOMATIC PLAY ADJUSTMENT**
ELEKTRISCH BETÄTIGTE BREMSE MIT AUTOMATISCHER SPIELEINSTELLUNG
FREIN A COMMANDE ELECTRIQUE A AJUSTEMENT DE JEU AUTOMATIQUE

(30) Priority: 14.04.1998 GB 9807726
(43) Date of publication of application: 29.03.2000
(73) Proprietor: Automotive Products Italia (SV) S.p.A., Cairo Montenotte, Savona (IT); AUTOMOTIVE PRODUCTS PLC, Leamington Spa Warwickshire CV31 3ER (GB)
(72) Inventor: CUCINOTTA, Luigi, I-20020 Arese (IT); PEASLEY, David, Coventry CV7 7AB (GB); YOUNG, Alastair, John, Kenilworth, Warwickshire CV8 1DW (GB)
(74) Representative: Morrall, Roger
(86) International application number: PCT/GB1999/001127
(87) International publication number: WO 1999/053214

(56) References cited:
- EP-A- 0 703 133
- WO-A-89/10496
- DE-A- 19 536 694
- US-A- 4 928 543
- US-A- 5 366 280

## Description

This invention relates to electrically operated brakes and in particular to electrically operated drum brakes and their operating systems, as known for example from US-A-4 928 543.

It is an object of the present invention to provide an electrically operated drum brake system which has a rapid response.

Thus according to the present invention there is provided an electrically operated drum brake system comprising a drum brake with a brake shoe displaceable into contact with an associated rotatable brake drum by an electrical actuator to apply the brake, the system being characterised in that the shoe reacts against a support abutment carrying a load sensing means, a control circuit which receives signals from the load sensing means indicative of the load applied to the abutment by the shoe and issues signals to the electrical actuator to apply and release the brake, the load sensing means initiating discontinuance of operation of the electrical actuator in a brake disengaging sense when the load applied to the support abutment by the shoe falls to a predetermined level.

Such a drum brake can be set-up to achieve a minimum shoe to drum clearance (or even slight shoe and drum contact) when the brake is released thus ensuring a quick brake response when the brake is actuated which is particularly important when the brake, for example, forms part of an electrically controlled anti-skid or traction control system.

Conveniently the electrical actuator may comprise an electric motor operated screw jack which increases or decreases its effective length dependent on the direction of current through the motor to apply or release the associated shoe.

The load sensing means may comprise a load cell positioned on the support abutment which gives a voltage output into the control circuit indicative of the load applied to the abutment by the shoe. The control circuit is preferably temperature sensitive to avoid possible over adjustment due to drum expansion.

Alternatively, the load sensing means may comprise an arrangement in which, when the brake is applied, the shoe displaces a support member carried by the abutment against the action of a spring means to close a switch in a brake release circuit and in which during brake release the switch opens when the force applied to the support member by the shoe which is closing the switch drops below the opposing force applied to the support member by the spring means.

Conveniently, the spring means may comprise a belleville spring which surrounds a stem on the support member which operates directly on the switch to close the switch.

By appropriate positioning of the load sensitive means the present invention is applicable to both leading/trailing shoe drum brakes and duo-servo drum brakes.
Figure 1 shows a side view of part of a drum brake in accordance with the present invention.

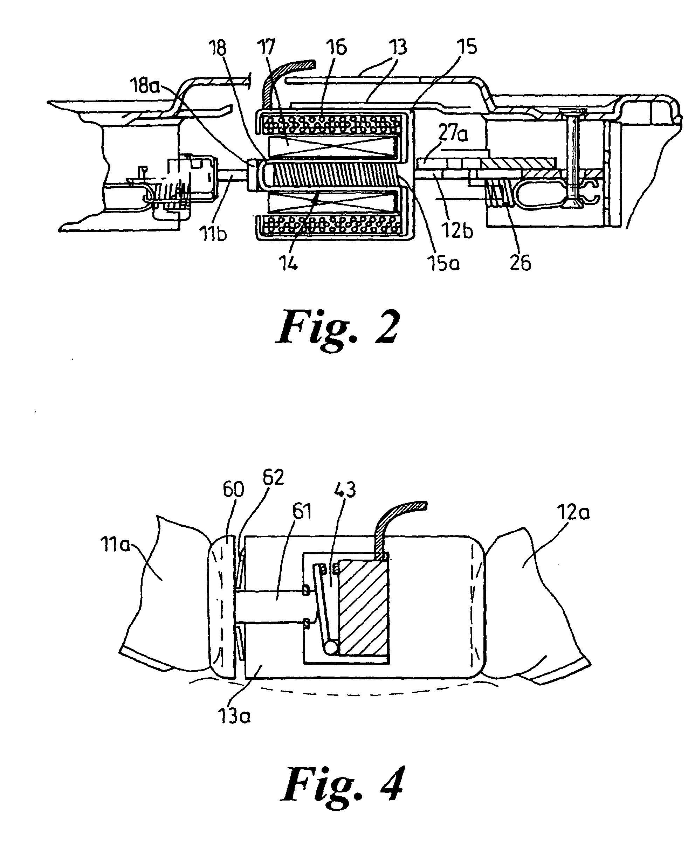

Figure 2 shows a fragmentary view in the direction of arrow A of figure 1;
Figure 3 shows a control circuit including a drum brake in accordance with the present invention, and
Figure 4 shows an alternative form of load sensing

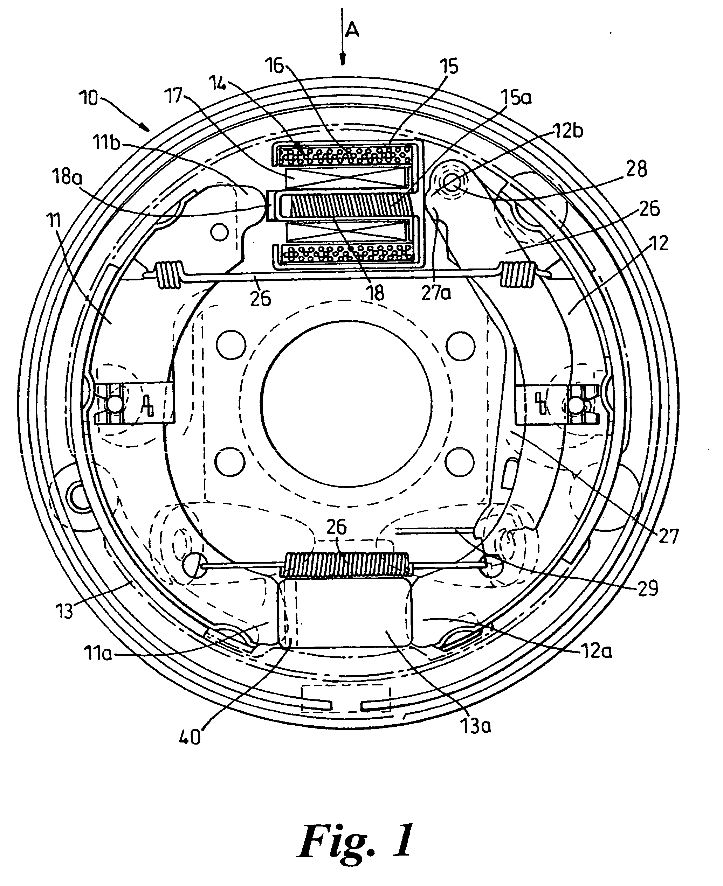

Referring to figure 1 this shows a drum brake 10 in which a pair of brake shoes 11 and 12 are supported on a backplate 13 in the normal manner and have their ends 11a and 12a reacting against a backplate supported abutment 13a. Between the other ends 11b and 12b of the brake shoes is provided an electric actuator 14 in the form of a motor having a casing 15 secured to backplate 13 which encircles a winding 16 and an armature 17 which rotates an inner tubular member 18. Inner member 18 is screw-threaded onto a central projection 15a of casing 15 so that rotation of inner member 18 increases or decreases the effective length of actuator 14, depending on the direction of rotation of armature 17, to apply or release the brake

A bearing cap 18a is provided between inner member 18 and the contacting end 11b of shoe 11 to accommodate the rotation of inner member 18 by armature 17.

Brake shoe return springs 26 act between shoes 11 and 12 in the conventional manner and a hand brake operating lever 27 pivotted on shoe 12 at 28 is actuated by a cable 29. Lever 27 includes an off-set cam 27a which bears on casing 15 and which displaces actuator 14 to move shoe 11 when lever 27 is rotated by cable 29 to apply the hand brake

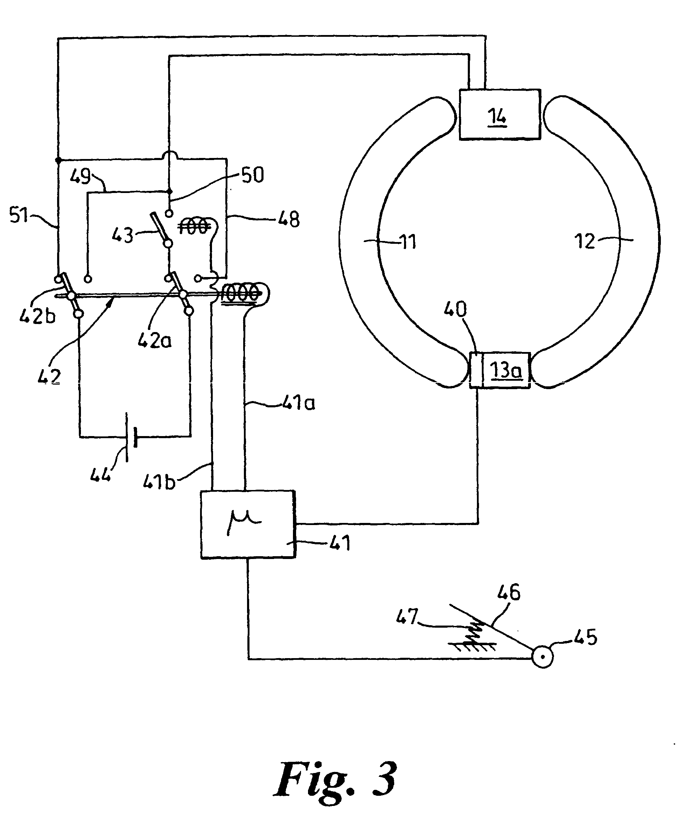

In accordance with the present invention a load sensing means 40, for example in the form of a load cell, is positioned between end 11a of shoe 11 and abutment 13a. Load cell 40 is connected to a control circuit shown diagrammatically in figure 3 in which a microprocessor 41 receives the voltage output from load cell 40 and produces output signals to control solenoid-operated switches 42 and 43 as will be explained below.

Contacts 42a and 42b of switch 42 have two positions and are used to reverse the direction of the current applied to motor 14 by battery 44. This switch is controlled from microprocessor 41 via line 41 a in response to signals from a transducer in the form of a rotary potentiometer 45 associated with brake pedal 46 which is depressed by the vehicle operator against a spring 47 to give the brake pedal the conventional pedal feel. Current is supplied to motor 14 in one direction via lines 48 and 49 when pedal 46 is depressed to increase the effective length of the motor to apply the brake Similarly when the pedal 46 is being released current is supplied to motor 14 in the other direction via lines 50 and 51.

Line 50 also includes switch 43 which is opened by microprocessor 41 via line 41b when the signal from load cell 40 falls below a predetermined load level. Thus as soon as the load applied to abutment 13a by shoe 11 drops below the predetermined load level further release of the brake is stopped by the opening of switch 43 which is in the brake release circuit.

Suitable choice of the load level at which switch 43 opens therefore enables the retraction of shoe 11 (and hence shoe 12) to be controlled so that a very small shoe clearance is obtained thus enabling the brake to have a quick response when actuated This is a particularly important feature wherein the brake forms part of, for example, an electronically controlled anti-skid or traction control system where quick response is essential.

As an alternative to arranging micro processor 41 to open a switch in the brake release circuit when the load applied to abutment 13a falls to a predetermined level, invention may be realised by arranging that a timer is started when the predetermined load level is reached which allows the motor to continue retraction for a predetermined time period thus again controlling the shoe to brake drum clearance of the brake

In a still further alternative arrangement when the predetermined load is reached the retraction of the brake shoe may be limited by counting a predetermined number of turns of the retracting motor after the load level has been reached thus again controlling the shoe to drum clearance.

The various alternative arrangements described above are preferably temperature sensitive to avoid possible over adjustment due to drum expansion.

Figure 4 shows an alternative load sensing arrangement in which the load cell 40 is replaced by an arrangement comprising a shoe support member 60 having a stem 61 which directly operates switch 43 in the brake retraction circuit. Shoe support member 60 is supported from abutment 13a and is moved towards this abutment against the action of a spring means in the form of a belleville washer 62. As will be appreciated, when the brake is applied belleville washer 62 is squashed flat and switch 43 is closed by stem 61. During brake release washer 62 remains squashed until the force supplied to shoe support member 60 by washer 62 is greater than the force supplied to support member 60 by shoe 11 whereupon support member 60 moves away from abutment 13a allowing switch 43 to open.

Thus the load level at which switch 43 opens can be directly tuned by use of an appropriate spring characteristic in washer 62. As will be appreciated other forms of spring means could be used in place of belleville washer 62.

Although the present invention has been described above in relation to a leading/trailing shoe drum brake it is equally applicable to a duo-servo drum brake which has no fixed support abutment 13a between the shoes and in which the braking forces are communicated back to the right hand end of actuator 14 (as viewed in Figure 1). In such an arrangement the load sensing means 40 is preferably located between the right hand end of actuator 14 (which acts as the support abutment) and the end 12b of shoe 12 in order to experience the total braking force.

Also, the amount of retraction of the shoes could also be made variable dependent on the level of braking force applied since high levels of braking force will result in more deflection of the components of the brake and hence require more retraction.

## Claims

1. An electrically operated drum brake system comprising a drum brake (10) with a brake shoe (11, 12) displaceable into contact with an associated rotatable brake drum by an electrical actuator (14) to apply the brake, the system being **characterised in that** the shoe (11, 12) reacts against a support abutment (13a) carrying a load sensing means (40), a control circuit (41, 42, 43) receives signals from the load sensing means (40) indicative of the load applied to the support abutment (13a) by the shoe (11, 12) and issues signals to the electrical actuator (14) to apply and release the brake, the load sensing means (40) initiating discontinuance of operation of the electrical actuator (14) in a brake disengaging sense when the load applied to the support abutment (13a) by the shoe (11, 12) falls to a predetermined level.

2. A brake system according to claim 1 **characterised in that** the electrical actuator (14) comprises an electric motor-operated screw-jack (15-18) which increases or decreases its effective length dependent on the direction of current through the motor to apply or release the associated brake shoe (11, 12).

3. A brake system according to claims 1 or 2 **characterised in that** the load sensing means comprises a load cell (40) positioned on the support abutment (13a) which gives a voltage output into the control circuit (41, 42, 43) indicative of the load applied to the abutment by the shoe (11).

4. A brake system according to claim 3 **characterised in that** when the load applied to the abutment (13a) has fallen to the predetermined level the control circuit (41, 42, 43) operates a switch (43) to discontinue its operation.

5. A brake system according to claim 3 **characterised in that** when the load applied to the abutment (13a) has fallen to the predetermined level the control circuit (41, 42, 43) starts a timer which allows retraction of the actuator (14) for a predetermined time to control the brake clearance.

6. A brake system according to claim 3 when dependent on claim 2 **characterised in that** when the load applied to the abutment (13a) has fallen to the predetermined level the control circuit starts a counter which allows a predetermined number of turns of the screw jack (15-18) to control brake clearance.

7. A brake system according to any one of claims 1 to 6 **characterised in that** the control circuit (41, 42, 43) is temperature sensitive to prevent inappropriate adjustment of the shoe (11, 12) due to thermal expansion of the associated drum.

8. A brake system according to any one of claims 3 to 7 **characterised in that** the control circuit (41, 42, 43) receives input signals from a brake pedal transducer (45) indicative of the position and direction of movement of the pedal (46) said input signals determining both the braking force applied by the shoe (11) and whether the actuator (14) moves to apply or release the brake.

9. A brake system according to any one of claims 1 to 7 **characterised in that** the movement of the shoe (11) in a disengaging sense varies in dependence on the load applied to the support abutment (13a) by the shoe (11).

10. A brake system according to claim 1 or 2 **characterised in that** the load sensing means comprises an arrangement in which, when the brake (10) is applied, the shoe displaces a support member (60) carried by the abutment (13a) against the action of a spring means (62) to close a switch (43) in a brake release circuit and in which during brake release the switch (43) opens when the force applied to the support member by the shoe (11) which is closing the switch drops below the opposing force applied to the support member by the spring means (62).

11. A brake system according to claim 10 **characterised in that** the spring comprises a belleville spring (62) which surrounds a stem (61) on the support member (60) which closes the switch (43).

12. A brake system according to any one of claims 1 to 11 in which the brake is a duo-servo brake **characterised in that** the support abutment is provided by one end of the electrical actuator (14).

## Patentansprüche

1. Elektrisch betriebenes Trommelbremsensystem mit einer Trommelbremse (10) mit einer Bremsbacke (11, 12), die von einer elektrischen Betätigungsvorrichtung (14) in Kontakt mit einer zugehörigen drehbaren Bremstrommel bewegbar ist, um die Bremse anzuziehen, wobei das System **dadurch gekennzeichnet ist, daß** die Backe (11, 12) eine Reaktionskraft auf ein Stützwiderlager (13a) ausübt, das eine Kraftfühleinrichtung (40) trägt, ein Steuerkreis (41, 42, 43) von der Kraftfühleinrichtung (40) Signale empfängt, die die von der Backe (11, 12) auf das Stützwiderlager (13a) ausgeübte Kraft anzeigen, und Signale an die elektrische Betätigungsvorrichtung (14) aussendet, um die Bremse anzuziehen und zu lösen, wobei die Kraftfühleinrichtung (40) die Unterbrechung des Betriebs der elektrischen Betätigungsvorrichtung (14) in einem Bremslösesinn initiiert, wenn die von der Backe (11, 12) auf das Stützwiderlager (13a) ausgeübte Kraft auf einen vorbestimmten Pegel abfällt.

2. Bremssystem nach Anspruch 1, **dadurch gekennzeichnet, daß** die elektrische Betätigungsvorrichtung (14) eine mit einem Elektromotor betriebene Schraubenwinde (15 bis 18) umfaßt, die ihre wirksame Länge in Abhängigkeit von der Richtung des Stromes durch den Motor vergrößert oder verkleinert, um die zugehörige Bremsbacke (11, 12) anzulegen oder zu lösen.

3. Bremssystem nach Anspruch 1 oder 2, **dadurch gekennzeichnet, daß** die Kraftfühleinrichtung eine an dem Stützwiderlager (13a) angeordnete Kraftmeßdose (40) umfaßt, die in den Steuerkreis (41, 42, 43) ein Spannungsausgangssignal gibt, das die von der Backe (11) auf das Widerlager ausgeübte Kraft anzeigt.

4. Bremssystem nach Anspruch 3, **dadurch gekennzeichnet, daß**, wenn die auf das Widerlager (13a) ausgeübte Kraft auf den vorbestimmten Pegel abgefallen ist, der Steuerkreis (41, 42, 43) einen Schalter (43) betätigt, um seinen Betrieb zu unterbrechen.

5. Bremssystem nach Anspruch 3, **dadurch gekennzeichnet, daß**, wenn die auf das Widerlager (13a) ausgeübte Kraft auf den vorbestimmten Pegel abgefallen ist, der Steuerkreis (41, 42, 43) ein Zeitschaltwerk startet, das ein Zurückziehen der Betätigungsvorrichtung (14) während einer vorbestimmten Zeit gestattet, um das Bremsenspiel zu steuern.

6. Bremssystem nach Anspruch 3, wenn rückbezogen auf Anspruch 2, **dadurch gekennzeichnet, daß**, wenn die auf das Widerlager (13a) ausgeübte Kraft auf den vorbestimmten Pegel abgefallen ist, der Steuerkreis ein Zählwerk startet, das eine vorbestimmte Anzahl von Drehungen der Schraubenwinde (15 bis 18) gestattet, um das Bremsenspiel zu steuern.

7. Bremssystem nach irgendeinem der Ansprüche 1 bis 6, **dadurch gekennzeichnet, daß** der Steuerkreis (41, 42, 43) temperaturempfindlich ist, um eine unrichtige Verstellung der Backe (11, 12) infolge einer thermischen Ausdehnung der zugehörigen Trommel zu verhindern.

8. Bremssystem nach irgendeinem der Ansprüche 3 bis 7, **dadurch gekennzeichnet, daß** der Steuerkreis (41, 42, 43) von einem Bremspedalmeßwandler (45) Eingangssignale empfängt, die die Position und Bewegungsrichtung des Pedals (46) anzeigen, wobei die Eingangssignale die von der Backe (11) ausgeübte Bremskraft bestimmt und auch bestimmt, ob die Betätigungsvorrichtung (14) sich bewegt, um die Bremse anzuziehen oder zu lösen.

9. Bremssystem nach irgendeinem der Ansprüche 1 bis 7, **dadurch gekennzeichnet, daß** die Bewegung der Backe (11) in einem lösenden Sinn sich in Abhängigkeit von der von der Backe (11) auf das Stützwiderlager (13a) ausgeübten Kraft ändert.

10. Bremssystem nach Anspruch 1 oder 2, **dadurch gekennzeichnet, daß** die Kraftfühleinrichtung eine Anordnung umfaßt, bei der, wenn die Bremse (10) angezogen wird, die Backe ein von dem Widerlager (13a) getragenes Stützglied (60) gegen die Wirkung einer Federeinrichtung (62) bewegt, um einen Schalter (43) in einem Bremslösekreis zu schließen, und bei der während des Lösens der Bremse der Schalter (43) sich öffnet, wenn die von der Backe (11) auf das Stützglied ausgeübte Kraft, die den Schalter schließt, unter die Gegenkraft abfällt, die von der Federeinrichtung (62) auf das Stützglied ausgeübt wird.

11. Bremssystem nach Anspruch 10, **dadurch gekennzeichnet, daß** die Feder eine Tellerfeder (62) umfaßt, die einen Schaft (61) an dem Stützglied (60) umgibt, der den Schalter (43) schließt.

12. Bremssystem nach irgendeinem der Ansprüche 1 bis 11, bei dem die Bremse eine Duo-Servobremse ist, **dadurch gekennzeichnet, daß** das Stützwiderlager von einem Ende der elektrischen Betätigungsvorrichtung (14) bereitgestellt wird.

## Revendications

1. Système de frein à tambour à commande électrique comprenant un frein à tambour (10) muni d'une mâchoire de frein (11, 12) capable d'entrer en contact avec un tambour de frein associé et monté tournant, par l'intermédiaire d'un vérin électrique (14) afin d'actionner le frein, le système **se caractérisant en ce que** la mâchoire (11, 12) vient s'appuyer contre une butée support (13a) portant des moyens capteurs de charge (40), un circuit de contrôle (41, 42, 43) reçoit des signaux issus des moyens capteurs de charge (40) indiquant la charge appliquée à la butée support (13a) par la mâchoire (11, 12) et émet des signaux en direction du vérin électrique (14) pour actionner et relâcher le frein, les moyens capteurs de charge (40) provoquant la suspension du fonctionnement du vérin électrique (14) dans le sens du dégagement du frein lorsque la charge appliquée à la butée support (13a) par la mâchoire (11, 12) tombe à un seuil prédéterminé.

2. Système de frein selon la revendication 1, **caractérisé en ce que** le vérin électrique (14) comprend une vis sans fin commandée par moteur électrique (15-18) qui augmente ou raccourcit sa longueur efficace en fonction du sens du courant qui passe dans le moteur, afin d'actionner ou de relâcher la mâchoire de frein associée (11, 12).

3. Système de frein selon les revendications 1 ou 2, **caractérisé en ce que** les moyens capteurs de charge comprennent une cellule de charge (40) placée sur la butée support (13a) qui génère une tension de sortie dans le circuit de contrôle (41, 42, 43) indiquant la charge appliquée à la butée par la mâchoire (11).

4. Système de frein selon la revendication 3 **caractérisé en ce que**, lorsque la charge appliquée à la butée (13a) tombe à un seuil prédéterminé, le circuit de contrôle (41, 42, 43) actionne un contacteur (43) afin de suspendre son fonctionnement.

5. Système de frein selon la revendication 3 **caractérisé en ce que**, lorsque la charge appliquée à la butée (13a) tombe à un seuil prédéterminé, le circuit de contrôle (41, 42, 43) déclenche un temporisateur qui permet le retrait du vérin (14) pendant une durée prédéterminée afin de contrôler le jeu du frein.

6. Système de frein selon la revendication 3 lorsqu'elle dépend de la revendication 2, **caractérisé en ce que**, lorsque la charge appliquée à la butée (13a) tombe à un seuil prédéterminé, le circuit de contrôle déclenche un compteur qui autorise un nombre de tours prédéterminé de la vis sans fin (15-18) afin de contrôler le jeu du frein.

7. Système de frein selon l'une quelconque des revendications 1 à 6, **caractérisé en ce que** le circuit de contrôle (41, 42, 43) est thermosensible afin d'éviter un réglage inadéquat de la mâchoire (11, 12) causé par la dilatation thermique du tambour associé.

8. Système de frein selon l'une quelconque des revendications 3 à 7, **caractérisé en ce que** le circuit de contrôle (41, 42, 43) reçoit des signaux d'entrée issus d'un transducteur de pédale de frein (45) indiquant la position et le sens de déplacement de la pédale (46), lesdits signaux d'entrée déterminant à la fois la force de freinage appliquée par la mâchoire (11) et le sens de déplacement du vérin (14) pour actionner ou relâcher le frein.

9. Système de frein selon l'une quelconque des revendications 1 à 7, **caractérisé en ce que** le déplacement de la mâchoire (11) dans le sens du dégagement varie en fonction de la charge appliquée à la butée support (13a) par la mâchoire (11).

10. Système de frein selon la revendication 1 ou 2, **caractérisé en ce que** les moyens capteurs de charge comprennent un dispositif dans lequel, lorsque le frein (10) est actionné, la mâchoire déplace un élément support (60) porté par la butée (13a) dans le sens contraire à l'action de moyens élastiques (62), afin de fermer un contacteur (43) situé dans un circuit de relâchement du frein et dans lequel, lors du relâchement du frein, le contacteur (43) s'ouvre lorsque la force appliquée à l'élément support par la mâchoire (11) qui ferme le contacteur passe sous le seuil de la force d'opposition appliquée à l'élément support par les moyens élastiques (62).

11. Système de frein selon la revendication 10, **caractérisé en ce que** les moyens élastiques comprennent un ressort Belleville (62) entourant une tige (61) sur l'élément support (60) qui ferme le contacteur (43).

12. Système de frein selon l'une quelconque des revendications 1 à 11, dans lequel le frein est un frein duo-servo **caractérisé en ce que** la butée support est fournie par une extrémité du vérin électrique (14).
